(19) Europäisches Patentamt
European Patent Office
Office européen des brevets

(11) **EP 4 031 857 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **20780974.0**

(22) Anmeldetag: **18.09.2020**

(51) Internationale Patentklassifikation (IPC):
**G01N 27/08** (2006.01)      **G01F 1/64** (2006.01)

(52) Gemeinsame Patentklassifikation (CPC):
**G01N 27/08; G01F 1/64; G01F 1/74**

(86) Internationale Anmeldenummer:
**PCT/EP2020/076165**

(87) Internationale Veröffentlichungsnummer:
**WO 2021/053177 (25.03.2021 Gazette 2021/12)**

(54) **MEHRPHASEN-MESSSYSTEM MIT KALIBRIERWERTNACHFÜHRUNG UND STRÖMUNGSTECHNISCHE ANORDNUNG**

MULTI-PHASE MEASUREMENT SYSTEM HAVING CALIBRATION VALUE UPDATING, AND FLUIDIC ASSEMBLY

SYSTÈME DE MESURE MULTIPHASE AVEC MISE À JOUR DE VALEURS D'ÉTALONNAGE, ET ENSEMBLE FLUIDIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2019 DE 102019125243**

(43) Veröffentlichungstag der Anmeldung:
**27.07.2022 Patentblatt 2022/30**

(73) Patentinhaber: **Helmholtz-Zentrum Dresden - Rossendorf e.V.**
**01328 Dresden (DE)**

(72) Erfinder:
• **WIEDEMANN, Philipp**
**01328 Dresden (DE)**
• **FLAISZ, André**
**01328 Dresden (DE)**
• **SCHLEICHER, Eckhard**
**01328 Dresden (DE)**

(74) Vertreter: **Müller Hoffmann & Partner Patentanwälte mbB**
**St.-Martin-Straße 58**
**81541 München (DE)**

(56) Entgegenhaltungen:
EP-A2- 0 510 774          DE-A1- 102006 019 178
DE-A1- 102008 055 032     DE-A1- 102017 106 209
DE-T2- 69 309 100

**Beschreibung**

TECHNISCHES FELD

Ausführungsbeispiele der vorliegenden Offenbarung beziehen sich auf eine strömungstechnische Anordnung, die Referenzwerte für das Kalibrieren von Mehrphasen-Messsystemen bereitstellt.

HINTERGRUND

Mehrphasenströmungen sind Strömungen heterogener Stoffgemische mit mindestens einem flüssigen oder gasförmigen Bestandteil in einer Rohrleitung. Mehrphasen-Messsysteme bestimmen Volumen- oder Massenanteile von Bestandteilen (Phasen) der Mehrphasenströmung und/oder den Volumen- oder Massenstrom von mindestens einem der Bestandteile.

Die Druckschrift US 9 927 270 B2 beschreibt ein tomographisches Verfahren zur Bestimmung der Phasenverteilung in Mehrphasenströmungen. Elektroden-Paare an der Wandung einer Venturi-Drossel führen Kapazitätsmessungen (ECT, electrical capacitance tomography), elektrische Widerstandsmessungen (ERT, electrical resistance tomography) und/oder Impedanzmessungen (EIT, electrical impedance tomography) durch. Aus den gemessenen Signalen können Rekonstruktionsalgorithmen die Phasenverteilung ermitteln. Die Druckschrift US 5 287 752 beschreibt das Bestimmen der Phasenverteilung von Öl/Wasser/Gas-Gemischen mittels Messung der komplexen Admittanz zwischen segmentierten kapazitiven Sensoren auf entlang der Strömungsrichtung eingebrachten, parallelen Platten.

Leitfähigkeits-Gittersensoren gemäß der Druckschrift DE 196 49 011 C2 bestimmen die Phasenverteilung leitfähiger Phasen im Rohrquerschnitt anhand von Leitfähigkeitsmessungen an Gitterpunkten einer Rohrquerschnittsebene. Gittersensoren gemäß der Druckschrift DE 10 2006 019 178 B2, die die Phasenverteilung im Rohrquerschnitt anhand der komplexen elektrischen Admittanz an Gitterpunkten einer Rohrquerschnittsebene ermitteln, ermöglichen die Bestimmung des Volumenanteils nicht-leitfähiger Phasen. In der Druckschrift US 2015 / 0 293 047 A1 wird beispielsweise auf Basis von Admittanzmessungen zwischen zwei Elektroden ein querschnittsgemittelter Wasseranteil in Öl/Wasser-Gemischen ermittelt. Die Druckschrift DE 10 2008 055 032 A1 beschreibt ein Mehrphasen-Messsystem, in welchem die gesamte Mehrphasenströmung mittels eines Kanalkörpers mit Kapillaren abschnittsweise separiert wird.

Kalibriermessungen ermöglichen es, die Beeinflussung von Messwerten durch das Messsystem selbst zumindest teilweise zu kompensieren. Das Ergebnis der Kalibriermessung hängt typischerweise von physikalischen Eigenschaften der Bestandteile der Mehrphasenströmung ab, die sich während des Betriebs des Mehrphasen-Messsystems ändern können, beispielsweise durch Änderung der Temperatur und/oder der chemischen Zusammensetzung eines Bestandteils. Die Nachführung der Kalibrierwerte kompensiert derartige Einflüsse, wodurch die Messgenauigkeit des Mehrphasen-Messsystems verbessert wird. Die Druckschrift US 5 260 667 beschreibt die Bestimmung des Wasseranteils in Wasser/Öl-Emulsionen anhand einer kalibrierten Admittanz-Messung. Die Kalibrierwerte werden einer temperaturbedingten Änderung der Leitfähigkeit des Wassers nachgeführt. Dazu wird eine Referenzmessung in einem ausschließlich mit (flüssigem) Wasser gefülltem Hilfsbehälter durchgeführt, der teilweise innerhalb der Rohrleitung angeordnet ist. Ein in der Druckschrift US 2017 / 0 261 357 A1 beschriebenes Mehrphasen-Messsystem umfasst einen Hilfsbehälter, welcher als Abzweig der Rohrleitung ausgeführt ist. Im Hilfsbehälter separieren Bestandteile unterschiedlicher Dichte durch Schwerkraftwirkung. Für mindestens einen der separierten Bestandteile wird innerhalb des Hilfsbehälters die elektrische Leitfähigkeit gemessen. Mit dem gemessenen Wert für die elektrische Leitfähigkeit werden die Kalibrierwerte des beschriebenen Mehrphasen-Messsystems bei Änderung von Temperatur und/oder Salzgehalt eines Bestandteils nachgeführt. Der Inhalt des Hilfsbehälters wird über eine dünne Leitung stromabwärts wieder in die Rohrleitung zurückgeführt.

Der vorliegenden Anmeldung liegt die Aufgabe zugrunde, ein präzises Mehrphasen-Messsystem zur Verfügung zu stellen bzw. die Einsatzmöglichkeiten für Mehrphasen-Messsysteme zu erweitern. Ein solches Mehrphasen-Messsystem wird durch den Gegenstand des Anspruchs 1 bereitgestellt. Eine strömungstechnische Anordnung mit einem solchen Mehrphasen-Messsystem ergibt sich aus dem Anspruch 8. Vorteilhafte Ausführungsformen ergeben sich aus den abhängigen Ansprüchen.

Ein Ausführungsbeispiel bezieht sich auf ein Mehrphasen-Messsystem für ein mehrphasiges Fluid. Das mehrphasige Fluid kann ein Gemisch aus mindestens zwei nicht oder nur schwer mischbaren Bestandteilen sein, wobei mindestens ein Bestandteil ein Fluid (z.B. ein Gas oder eine Flüssigkeit) ist. Beispielsweise weist das mehrphasige Fluid mindestens zwei Fluide auf, von denen mindestens zwei ein heterogenes Gemisch bilden. Das mehrphasige Fluid kann auch ein Fluid, z.B. ein Gas, enthalten, das einen Feststoff transportiert. Das mehrphasige Fluid kann z.B. ausschließlich Flüssigkeiten oder ein Gemisch mit mindestens einem Gas und mit mindestens einer Flüssigkeit aufweisen.

Beispielsweise ist das mehrphasige Fluid ein zweiphasiges Fluid, wobei im Fall einer Einkomponenten-Zweiphasenströmung ein Gas und eine Flüssigkeit mit der gleichen chemischen Zusammensetzung durch eine Rohrleitung strömen, z.B. (flüssiges) Wasser und (gasförmiger) Wasserdampf, und im Fall einer Zweikomponenten-Zweiphasenströmung ein Gas und eine Flüssigkeit mit unterschiedlicher chemischer Zusammensetzung, z.B. (flüssiges) Wasser und Luft. Beispiele für ein dreiphasiges Fluid sind Gemische mit (flüssigem) Wasser, Öl und einem oder mehreren Gasen.

Einphasige Teilströme ("Phasen") des mehrphasigen Fluids können in einer Mehrphasenströmung kontinuierlich voneinander getrennt strömen, z.B. in Form einer stratifizierten Strömung, oder diskontinuierlich, z.B. in Form einer Blasenströmung.

Das Mehrphasen-Messsystem kann den Volumen- und/oder Massenanteil von mindestens einem der einphasigen Teilströme des mehrphasigen Fluids bestimmen. Alternativ oder zusätzlich kann das Mehrphasen-Messsystem den Volumen- und/oder Massenstrom von mindestens einem der einphasigen Teilströme des mehrphasigen Fluids bestimmen.

Das Mehrphasen-Messsystem kann eine Referenzwert-Messanordnung aufweisen. Die Referenzwert-Messanordnung kann eine oder mehrere Kapillaren und eine Kapillaren-Messeinrichtung aufweisen.

Für Referenzwert-Messanordnungen mit mehr als einer Kapillare betreffen im Folgenden Angaben, die sich auf eine Kapillare richten, jede einzelne der Kapillaren, soweit nicht ausdrücklich etwas anderes dazu ausgeführt ist.

Eine innere Querschnittsfläche der Kapillare kann z.B. kreisförmig, oval oder eckig mit abgerundeten Kanten sein. Form und Größe der inneren Querschnittsfläche und/oder der Kapillarenwandung können entlang einer Längsausdehnung der Kapillare gleich bleiben. Beispielsweise kann die Kapillare in der Art eines geraden, kreisrunden Rohrstücks mit konstantem Innendurchmesser und konstantem Außendurchmesser ausgeführt sein.

Innere Querschnittsfläche und Länge der Kapillare sind so bemessen, dass sich die Phasen des durch die Kapillare strömenden Teilstroms des mehrphasigen Fluids durch Grenzflächenkräfte, **z.B.** Kapillarkräfte in Strömungsrichtung separieren. Beispielsweise wird ein zweiphasiges Fluid zu einer binären Strömung der Phasen separiert. Es kommt zu einer intermittierenden Strömung innerhalb der Kapillare. Mit anderen Worten: Ein sich entlang der Strömungsrichtung erstreckender Abschnitt der Kapillare wird abwechselnd von jeweils genau einer der Phasen durchströmt.

Die Kapillaren-Messeinrichtung ist zur Messung mindestens einer physikalischen Eigenschaft mindestens einer der durch die Kapillare oder durch die Kapillaren fließenden Phasen eingerichtet. Die physikalischen Eigenschaften sind beispielsweise die radiologische Dichte, die elektrische Leitfähigkeit, die relative Permittivität, die Temperatur oder die spezifische Dichte der Phase. Beispielsweise kann die Kapillaren-Messeinrichtung einen Leitfähigkeitssensor, einen kontaktlosen Leitfähigkeitsdetektor, einen Kapazitätssensor, eine Nadelsonde, ein Thermoelement, ein Widerstandsthermometer, ein Gammadensitometer und/oder ein Röntgendensitometer umfassen.

Zudem kann das Mehrphasen-Messsystem eine Mehrphasen-Messeinrichtung aufweisen. Die Mehrphasen-Messeinrichtung kann für eine Messung eines Volumen- und/oder Massenanteils von mindestens einer der Phasen und/oder eines Volumen- und/oder Massenstromes von mindestens einer der Phasen des mehrphasigen Fluids durch eine Rohrleitung unter Berücksichtigung der von durch die Kapillaren-Messeinrichtung ermittelten physikalischen Eigenschaft(en) eingerichtet sein.

Die Mehrphasen-Messeinrichtung kann stromaufwärts oder stromabwärts zur Kapillare in der Rohrleitung angeordnet sein oder kann von der Kapillare überbrückt werden, wobei Eintrittsöffnungen der Kapillare stromaufwärts von der Mehrphasen-Messeinrichtung und Austrittsöffnungen der Kapillare stromabwärts von der Mehrphasen-Messeinrichtung ausgebildet sind. Ist die Mehrphasen-Messeinrichtung stromaufwärts oder stromabwärts zur Kapillare angeordnet, kann die Mehrphasen-Messeinrichtung in räumlicher Nähe zur Kapillare vorgesehen sein.

Das Ergebnis der Mehrphasen-Messeinrichtung hängt von der physikalischen Eigenschaft bzw. den physikalischen Eigenschaften ab, die von der Kapillaren-Messeinrichtung an der Kapillare bestimmt wird bzw. werden. Beispielsweise kann die Kapillaren-Messeinrichtung direkt und unmittelbar genau die physikalische Eigenschaft bzw. die physikalischen Eigenschaften erfassen, auf der das Messprinzip der Mehrphasen-Messeinrichtung beruht, z.B. die elektrische Leitfähigkeit, die relative Permittivität, die komplexe elektrische Admittanz, und/oder die radiologische Dichte. Die von der Kapillaren-Messeinrichtung gemessene oder erfasste physikalische Eigenschaft bzw. gemessenen oder erfassten physikalischen Eigenschaften können auch andere sein als die von der Mehrphasen-Messeinrichtung genutzte, sofern sich aus der von der Kapillaren-Messeinrichtung ermittelten physikalischen Eigenschaft bzw. ermittelten physikalischen Eigenschaften ausreichend genau auf die physikalische Eigenschaft schließen lässt, aufgrund der die Mehrphasen-Messeinrichtung den Volumen- und/oder Massenanteil einer Phase oder den Volumen- und/oder Massenstrom der Phase bestimmt.

Die Messung durch die Mehrphasen-Messeinrichtung kann die mindestens eine tatsächliche, aktuelle physikalische Eigenschaft mindestens einer der Phasen berücksichtigen. Ändert sich eine zur Messung durch die Mehrphasen-Messeinrichtung wesentliche Eigenschaft einer Phase, beispielsweise durch Temperaturänderung, durch Druckänderung, durch Änderung der Zusammensetzung der Phase, z.B. durch Konzentrationsänderung oder durch Verunreinigungen, so kann die Berechnung der Volumen- und/oder Massenanteile und/oder Volumen- und/oder Massenströme ohne Unterbrechung der Mehrphasenströmung im laufenden Betrieb entsprechend angepasst werden. Die Messgenauigkeit für die Volumen- und/oder Massenanteile und/oder Volumen- und/oder Massenströme kann unabhängiger von anderen Betriebsparametern z.B. Parametern der mehrphasigen Fluids werden und lässt sich ohne aufwendige Berechnung thermophysikalischer und elektrischer Eigenschaften des Fluidstroms bzw. ohne zusätzliche Komponenten zur Temperatur- und/oder Druckmessung verbessern. Das Messprinzip für die Kapillaren-Messeinrichtung ist variabel.

Die sequentielle Trennung der Phasen in der Kapillare ermöglicht die kontinuierliche, nahezu synchrone Erfassung der relevanten physikalischen Eigenschaft für mehrere oder alle Phasen der Mehrphasenströmung jeweils im einphasigen Bereich. Mit der Anzahl der Phasen, für die die für das Mehrphasen-Messsystem relevante physikalische Eigenschaft bekannt ist, kann die Genauigkeit des Mehrphasen-Messsystems erhöht werden.

Die Kalibrierung der Mehrphasen-Messeinrichtung kann im Betrieb des Mehrphasen-Messsystems und nahezu ohne Zeitverzug sich ändernden Parametern nachgeführt werden. Gegenüber Mehrphasen-Messsystemen, bei welchen beispielsweise die Leitfähigkeit oder Temperatur einer Phase in von der Rohrleitung abzweigenden Hilfsbehältern oder Schwerkraftseparatoren gemessen wird, kann das Mehrphasen-Messsystem gemäß den vorliegenden Ausführungsformen deutlich schneller reagieren und somit genauere Messwerte liefern. Gegenüber Anordnungen, die die gesamte Strömung durch Kapillaren führen, kann das Mehrphasen-Messsystem gemäß den vorliegenden Ausführungsformen einen deutlich geringeren Strömungswiderstand aufweisen. Gegenüber Anordnungen, die eine Änderung der Strömungsform erzwingen, kann die Beeinflussung des Strömungsprozesses durch das Mehrphasen-Messsystem gemäß den vorliegenden Ausführungsformen reduziert werden.

Das Mehrphasen-Messsystem ist für nahezu alle technisch relevanten Strömungsformen in horizontalen, vertikalen und beliebig geneigten Rohrleitungen einsetzbar. Das Messsystem kann auf Änderungen der für die Strömungsmessung maßgeblichen physikalischen Eigenschaft mindestens einer der Phasen vergleichsweise schnell ansprechen.

Gemäß einer Ausführungsform beträgt die innere Querschnittsfläche der Kapillare höchstens $\pi*25mm^2$. Beispielsweise beträgt die innere Querschnittsfläche der Kapillare höchstens $\pi*2.25mm^2$. Beispielsweise beträgt ein Innendurchmesser einer Kapillare mit kreisförmiger innerer Querschnittsfläche maximal 10mm, 5mm oder 3mm. Die Kapillaren einer Referenzwert-Messanordnung mit mehr als einer Kapillare können unterschiedliche, annähernd gleiche oder gleich große innere Querschnittsflächen aufweisen.

Gemäß einer Ausführungsform beträgt die Länge der Kapillare höchstens 100cm. Beispielsweise beträgt die Länge der Kapillare höchstens 25cm. Eine Referenzwert-Messanordnung mit mehr als einer Kapillare kann Kapillaren unterschiedlicher, annähernd gleicher oder gleicher Länge aufweisen.

Gemäß einer Ausführungsform kann eine der mindestens einen physikalischen Eigenschaft, anhand der die Mehrphasen-Messeinrichtung den Volumen- und/oder Massenanteil von mindestens einer der Phasen des mehrphasigen Fluids und/oder einen Volumen- und/oder Massenstrom einer der Phasen des mehrphasigen Fluids durch die Rohrleitung bestimmt, die elektrische Leitfähigkeit oder die relative Permittivität sein. Typischerweise können die elektrische Leitfähigkeit und/oder die relative Permittivität der Phasen in eine Kalibrierung der Mehrphasen-Messeinrichtung eingehen. Die elektrische Leitfähigkeit kann von der Kapillaren-Messeinrichtung an der Kapillare durch eine geeignete Messsonde vergleichsweise einfach, schnell und genau bestimmt werden. Die von der Kapillaren-Messeinrichtung an der Kapillare ermittelte physikalische Größe kann von der Mehrphasen-Messeinrichtung unmittelbar zum Nachführen der Kalibrierwerte verwendet werden.

Gemäß einer Ausführungsform kann die Mehrphasen-Messeinrichtung eine Sensoreinheit aufweisen, die den lokalen volumetrischen Anteil mindestens einer der Phasen des eine Rohrleitung durchströmenden mehrphasigen Fluids an mehreren Orten, z.B. an allen Orten in einer ebenen Querschnittsfläche quer zur Strömungsrichtung bestimmt.

Beispielsweise handelt es sich bei der Sensoreinheit um eine strahlungstomographische Sensoreinheit zur Erfassung einer Vielzahl von Durchstrahlungsprojektionen Die tomographische Sensoreinheit berechnet, z.B. mittels eines Bildrekonstruktionsalgorithmus, der z.B. durch einen Computer der Sensoreinheit ausgeführt werden kann, anhand einer Vielzahl von so erfassten, örtlich überlagerten Durchstrahlungsprojektionen ein überlagerungsfreies Schnittbild der Phasenverteilung, aus dem die lokalen volumetrischen Anteile mindestens einer Phase in einer zur Strömungsrichtung senkrechten Querschnittsfläche extrahiert werden können.

Die strahlungstomographische Sensoreinheit umfasst beispielsweise eine Röntgencomputertomographie-Einrichtung, eine optische Tomographie-Einrichtung, eine Gammastrahlentomographie-Einrichtung oder eine Ultraschalltomographie-Einrichtung. Nach einem anderen Ausführungsbeispiel für eine tomographische Sensoreinheit umfasst die Sensoreinheit mindestens zwei Elektrodenpaare für elektrotomographische Verfahren wie ERT, ECT und/oder EIT.

Nach einer weiteren Ausführungsform weist die Sensoreinheit mehrere einzelne Messwertaufnehmer auf, die über eine Querschnittsfläche des strömenden Fluids verteilt angeordnet sind und die anhand einer geeigneten physikalischen Eigenschaft die lokalen Anteile einer Phase des Fluids an mehreren Orten bestimmen.

Gemäß einer Ausführungsform kann die Mehrphasen-Messeinrichtung einen Gittersensor aufweisen. Ein Gittersensor kann die örtliche elektrische Leitfähigkeit und/oder die relative Permittivität eines eine Rohrleitung durchströmenden mehrphasigen Fluids an Gitterpunkten in einer Ebene quer zur Strömungsrichtung bestimmen.

Beispielsweise kann die Mehrphasen-Messeinrichtung einen Gittersensor aufweisen, der die elektrische Leitfähigkeit eines eine Rohrleitung durchströmenden mehrphasigen Fluids an mehreren Messpunkten in einer Ebene quer zur Strömungsrichtung bestimmt. Die Messpunkte können in einem Gitter angeordnet sein.

Beispielsweise kann ein Gittersensor mehrere lineare Anregungselektroden und mehrere lineare Erfassungselektroden aufweisen, wobei die Anregungselektroden in einer Anregungsebene und die Erfassungselektroden in einer Messebene angeordnet sind. Anregungsebene und Messebene können senkrecht zur Strömungsrichtung ausgerichtet und in Strömungsrichtung in einem vergleichsweise kleinen Messabstand zueinander angeordnet sein. Die Anregungselektroden und die Erfassungselektroden sind zueinander verdreht angeordnet, beispielsweise unter einem Winkel von 90 Grad.

Jede Erfassungselektrode kann jede Anregungselektrode im Messabstand kreuzen, wobei die Anregungselektroden in oder entgegen der Strömungsrichtung in einem Abstand von den Erfassungselektroden angeordnet und - bei Abwesenheit eines leitfähigen Fluids - elektrisch voneinander separiert sind. Die Anregungselektroden können in kurzem zeitlichen Abstand hintereinander einzeln angeregt werden, beispielsweise durch Spannungsimpulse. Dabei kann in jeder Erfassungselektrode ein Strom auftreten, der zum mittleren Leitwert des Messmediums in der Umgebung des Kreuzungspunktes zwischen der jeweiligen Erfassungselektrode und der jeweils angeregten Anregungselektrode proportional ist. Aus der Stromstärke in der Erfassungselektrode kann der lokale volumetrische Anteil einer Phase ermittelt werden, sofern die elektrische Leitfähigkeit mindestens einer der Phasen bekannt ist. Wird anstelle eines Spannungspulses eine Wechselspannung an die Anregungselektrode gelegt, kann anstelle des Leitwertes auch die Permittivität im Kreuzungspunkt ermittelt werden, was es ermöglicht, auch in Kombinationen nicht-leitfähiger Medien die Phasenanteile zu quantifizieren.

Die stetige Nachführung des tatsächlichen Wertes für die elektrische Leitfähigkeit und/oder für die relative Permittivität einer, mehrerer oder aller Phasen im Mehrphasen-Messsystem erhöht die Genauigkeit und ermöglicht den Einsatz von Sensoreinheiten zur Bestimmung des lokalen volumetrischen Anteils einer Phase, z.B. Gittersensoren für solche Anwendungen, in denen die Temperatur und/oder die Zusammensetzung der Phasen schnellen und/oder starken Schwankungen unterworfen sind, z.B. bei der Förderung von Rohöl und/oder Gasen oder bei der Messung des Dampfgehalts in direktverdampfenden Solarkraftwerken.

Gemäß einer Ausführungsform kann das Mehrphasen-Messsystem eine Datenverarbeitungseinheit umfassen. Die Datenverarbeitungseinheit kann dazu eingerichtet sein, anhand der von der Kapillaren-Messeinrichtung ermittelten physikalischen Eigenschaft(en) Referenzwerte für die Mehrphasen-Messeinrichtung bereitzustellen. Die Datenverarbeitungseinheit kann datentechnisch mit der Kapillaren-Messeinrichtung und der Mehrphasen-Messeinrichtung verbunden sein. Die Datenverarbeitungseinheit kann beispielsweise aus dem Zeitverlauf der in den Kapillaren erfassten Messdaten intervallbezogene globale Minima und Maxima aller Kapillaren ermitteln und diese als Referenzwerte für die Mehrphasen-Messeinrichtung zur Verfügung stellen.

Anstelle globaler Messwerte kann die Datenverarbeitungseinheit der Mehrphasen-Messeinrichtung im Falle einer Referenzwert-Messanordnung mit mehr als einer Kapillare auch lokale Kalibrierwerte zur Verfügung stellen. In Verbindung mit einer Mehrphasen-Messeinrichtung mit einer Sensoreinheit, die den lokalen volumetrischen Anteil mindestens einer der Phasen des mehrphasigen Fluids an mehreren Orten in einer ebenen Querschnittsfläche quer zur Strömungsrichtung bestimmt, kann die Datenverarbeitungseinheit den unterschiedlichen Orten unterschiedliche Kalibrierwerte zuordnen.

Weist die Sensoreinheit beispielsweise mehrere einzelne Messwertaufnehmer auf, die über eine Querschnittsfläche des strömenden Fluids verteilt angeordnet sind, kann die Datenverarbeitungseinheit jedem Messwertaufnehmer, beispielsweise jedem Gitterpunkt eines Gittersensors, einen eigenen Kalibrierwert zuordnen.

Die Nachführung der Kalibrierwerte im Mehrphasen-Messsystem kann demnach automatisiert und im laufenden Betrieb erfolgen, wodurch die Phasenverteilung und/oder Phasenvolumenströme bzw. Phasenmassenströme trotz sich verändernden Eigenschaften der Phasen korrekt bestimmt werden können.

Die Datenverarbeitungseinheit zur Bereitstellung der Referenzwerte kann integraler Bestandteil einer Datenverarbeitungseinheit zur Steuerung und Auswertung von elektrischen Signalen für die Mehrphasen-Messeinrichtung sein. Alternativ können die Datenverarbeitungseinheit zur Bereitstellung der Referenzwerte und die Datenverarbeitungseinheit zur Steuerung und Auswertung von elektrischen Signalen für die Mehrphasen-Messeinrichtung separat ausgeführt sein.

Gemäß einer Ausführungsform kann das Mehrphasen-Messsystem eine einzige Kapillare aufweisen, deren Eintrittsöffnung in der geometrischen Mitte eines Strömungsquerschnitts, beispielsweise eines Rohrleitungsquerschnitts angeordnet sein kann. Beispielsweise sind Rohrleitung und Kapillare koaxial angeordnet. Ein Mehrphasen-Messsystem mit nur einer Kapillare kann beispielsweise für Anwendungen ausreichend sein, in der lediglich Blasenströmungen, beispielsweise vertikale Blasenströmungen auftreten bzw. erwartet werden. Eine Ausführungsform mit nur einer Kapillare erzeugt nur einen geringen Druckabfall und kann auch in Strömungen mit vergleichsweise kleinem Querschnitt eingesetzt werden.

Gemäß einer anderen Ausführungsform kann das Mehrphasen-Messsystem genau zwei Kapillaren aufweisen. Die Eintrittsöffnungen der beiden Kapillaren können in etwa oder genau in der gleichen Querschnittsebene der Rohrleitung angeordnet sein oder in zwei Querschnittsebenen, die entlang der Strömungsrichtung in einem Abstand zueinander angeordnet sind.

In beiden Fällen kann die Eintrittsöffnung der einen Kapillare in der geometrischen Mitte des Strömungsquerschnitts, z.B. des Rohrleitungsquerschnitts angeordnet sein und die Eintrittsöffnung der anderen Kapillare in einem Abstand zur geometrischen Mitte. Der Abstand der anderen Kapillare zur geometrischen Mitte kann beispielsweise größer sein als der halbe mittlere Innenradius der Rohrleitung. Zum Beispiel kann die andere Kapillare an einer Innenwandung der Rohrleitung angebracht sein. Ein Mehrphasen-Messsystem mit zwei derart angeordneten Kapillaren kann beispielsweise für Anwendungen ausreichend sein, in der lediglich konzentrische Strömungen auftreten bzw. erwartet werden. Nach einem anderen Ausführungsbeispiel für ein Mehrphasen-Messsystem mit genau zwei Kapillaren können die Eintrittsöffnungen der beiden Kapillaren einander am geometrischen Mittelpunkt des Rohrleitungsquerschnitts gegenüberliegend, bspw. an der Rohrinnenwandung angeordnet sein. Beispielsweise kann die eine Kapillare am Fußpunkt und die andere Kapillare am Zenit einer horizontalen Rohrleitung angeordnet sein. Ein Mehrphasen-Messsystem mit zwei derart angeordneten Kapillaren kann beispielsweise für Anwendungen ausreichend sein, in der lediglich stratifizierte Strömungen zu erwarten sind, beispielsweise horizontal stratifizierte Strömungen.

Gemäß einer Ausführungsform kann das Mehrphasen-Messsystem mindestens drei Kapillaren aufweisen, deren Querschnitt und Länge so bemessen sind, dass sich bei Durchströmung der Kapillaren in jeder Kapillare ein mindestens binärer Strömungsfluss einstellt. Die Kapillaren können dabei so ausgebildet und angeordnet sein, dass sie unterschiedlichen Volumen-Teilströmen des mehrphasigen Fluids zugeordnet sind. Mit anderen Worten, im Betrieb des Mehrphasen-Messsystems werden die mindestens drei Kapillaren von jeweils unterschiedlichen Volumen-Teilströmen des mehrphasigen Fluids durchströmt. Die Eintrittsöffnungen der Kapillaren können in einer Ebene oder näherungsweise in einer Ebene senkrecht zur Strömungsrichtung oder mit individuellem axialen Versatz zu einer solchen Ebene angeordnet sein. In anderen Worten, die drei Kapillaren können in der gleichen Querschnittsebene angeordnet sein, oder in zwei oder drei Querschnittsebenen, die entlang der Strömungsrichtung in einem Abstand zueinander angeordnet sind. Der maximale Abstand zwischen zwei Querschnittsebenen mit Eintrittsöffnungen beträgt beispielsweise maximal das Doppelte der Länge einer zwischen den beiden Querschnittsebenen angeordneten Kapillare oder ist gleich oder kleiner der Länge der betreffenden Kapillare.

Die Längsachse jeder Kapillare kann parallel zur Hauptströmungsrichtung, beispielsweise entlang einer Rohrachse ausgerichtet sein. Die Kapillaren können unterschiedliche innere Querschnittsflächen und/oder Längen aufweisen. Nach einer Ausführungsform können die Kapillaren die gleiche innere Querschnittsfläche und/oder die gleiche Länge aufweisen.

Ein Mehrphasen-Messsystem mit drei oder mit mehr als drei Kapillaren kann den Einsatz in Anwendungen ermöglichen, in denen die Strömungsform des mehrphasigen Fluids unbekannt ist oder die Mehrphasenströmung zwischen mindestens zwei Strömungsformen wechselt.

Gemäß einer weiteren Ausführungsform kann das Mehrphasen-Messsystem integraler Bestandteil einer strömungstechnischen Anordnung sein. Die strömungstechnische Anordnung kann zudem eine Rohrleitung aufweisen. Die Rohrleitung kann ein starres oder flexibles Rohr, einen flexiblen Schlauch oder ein anderes strömungsführendes Gefäß oder Behältnis umfassen. Durch die Rohrleitung strömt das mehrphasige Fluid. Eine Eintrittsöffnung der mindestens einen Kapillare kann in einer Querschnittsebene der Rohrleitung angeordnet sein.

Gemäß einer Ausführungsform kann eine Eintrittsöffnung einer von drei oder mehr Kapillaren im geometrischen Mittelpunkt eines Rohrleitungsquerschnitts angeordnet sein. Eine Eintrittsöffnung einer weiteren der mindestens drei Kapillaren kann in einem ersten Abstand zum geometrischen Mittelpunkt des Rohrleitungsquerschnitts angeordnet sein, der größer ist als der halbe mittlere Radius der Rohrleitung, beispielsweise an einer Innenwandung der Rohrleitung. Ein Mehrphasen-Messsystem in dem die Eintrittsöffnung einer von mehreren Kapillaren in der geometrischen Mitte angeordnet ist, kann beispielsweise für Anwendungen geeignet sein, in der neben anderen Strömungsformen auch konzentrische Strömungen auftreten können bzw. erwartet werden.

Gemäß einer Ausführungsform kann mindestens eine der weiteren Kapillaren an eine Innenwandung der Rohrleitung angrenzen. Beispielsweise grenzen zwei von genau drei oder mehr Kapillaren an die innere Rohrwandung der Rohrleitung an, wobei alle Kapillaren, beispielsweise alle drei Kapillaren entlang eines Durchmessers der Rohrleitung angeordnet sind. Mit einer solchen Anordnung können für die meisten üblichen Strömungsformen Referenzwerte zur Kalibrierwertnachführung einer Mehrphasen-Messeinrichtung zur Verfügung gestellt werden. Insbesondere kann sich während des Betriebs des Mehrphasen-Messsystems der Strömungstyp der Mehrphasenströmung in der Rohrleitung nahezu beliebig ändern, ohne dass davon die Präzision der Messung der Mehrphasen-Messeinrichtung negativ beeinträchtigt ist.

Gemäß einer Ausführungsform können die Kapillaren vollständig in der Rohrleitung angeordnet sein. Es sind keine Durchbrüche in der Wandung der Rohrleitung für die Kapillaren erforderlich. Insbesondere für Ausführungsformen des Mehrphasen-Messsystems mit zwei einander gegenüberliegenden Kapillaren an der Innenwandung der Rohrleitung kann sich ein ökonomischer Aufbau ergeben.

Gemäß einer anderen Ausführungsform kann mindestens eine der Kapillaren teilweise außerhalb der Rohrleitung ausgebildet sein. Beispielsweise kann eine Kapillare mit einer Eintrittsöffnung in der geometrischen Mitte des Rohrleitungsquerschnitts nach außen geführt sein. Eine solche Anordnung kann eine zuverlässige Messung der physikalischen Eigenschaft(en) einer Phase ermöglichen, die nur oder fast ausschließlich im Zentrum der Rohrleitung fließt. Sind alle Kapillaren nach außen geführt, wird dadurch der Einsatz einer Vielzahl unterschiedlicher Messsensoren für die Kapillaren-Messeinrichtung ermöglicht.

Gemäß einer Ausführungsform kann die Kapillare bzw. können die Kapillaren so eingerichtet und angeordnet sein, dass sich eine Durchströmung der Kapillaren allein durch eine Druckdifferenz zwischen der Eintrittsöffnung und der Austrittsöffnung der jeweiligen Kapillare ergibt. Es ergibt sich eine einfache und wartungsfreie Anordnung der Kapillaren im Mehrphasen-Messsystem.

Beispielsweise kann in der Rohrleitung stromaufwärts von den Austrittsöffnungen der Kapillaren und stromabwärts von den Eintrittsöffnungen der Kapillaren eine statische oder veränderbare Strömungswiderstandseinrichtung angeordnet sein, die zwischen den Eintrittsöffnungen und den Austrittsöffnungen eine ausreichende Druckdifferenz für eine ausreichende Durchströmung der Kapillaren erzeugt. Alternativ kann die Durchströmung der Kapillare durch ein Hilfsmittel, beispielsweise durch eine Pumpe, unterstützt sein.

Gemäß einer Ausführungsform beträgt die innere Querschnittsfläche der Kapillare maximal 5% einer inneren Querschnittsfläche der Rohrleitung in der Querschnittsebene der Eintrittsöffnung der Kapillare. Kapillaren mit kleiner innerer Querschnittsfläche beeinflussen die Strömung des Fluids nur in geringem Umfang.

Gemäß einer Ausführungsform beträgt die Länge der mindestens einen Kapillare maximal ein Zehnfaches eines maximalen Durchmessers der Rohrleitung in der Querschnittsebene der Eintrittsöffnung der Kapillare.

Weitere Merkmale und Vorteile des offenbarten Gegenstands erschließen sich dem Fachmann aus der nachfolgenden detaillierten Beschreibung sowie aus den Zeichnungen.

KURZBESCHREIBUNG DER ZEICHNUNGEN

Die beigefügten Zeichnungen vermitteln ein tiefergehendes Verständnis von Ausführungsbeispielen für ein Mehrphasen-Messsystem mit Kalibrierwertnachführung und eine strömungstechnische Anordnung, sind in die Offenbarung einbezogen und bilden einen Teil von ihr. Die Zeichnungen veranschaulichen lediglich Ausführungsbeispiele und dienen zusammen mit der Beschreibung zum Erläutern derer Prinzipien. Das hier beschriebene Mehrphasen-Messsystem und die strömungstechnische Anordnung mit einem Mehrphasen-Messsystem sind durch die Beschreibung der Ausführungsbeispiele nicht auf diese beschränkt. Weitere Ausführungsbeispiele und beabsichtigte Vorteile ergeben sich aus dem Verständnis der nachfolgenden detaillierten Beschreibung sowie aus Kombinationen der nachfolgend beschriebenen Ausführungsbeispiele, selbst wenn diese nicht explizit beschrieben sind. Die in den Zeichnungen gezeigten Elemente und Strukturen sind nicht notwendigerweise zueinander maßstabsgetreu dargestellt. Gleiche Bezugszeichen verweisen auf gleiche oder einander entsprechende Elemente und Strukturen.

FIG. 1 zeigt einen schematischen Längsschnitt durch eine Rohrleitung mit einem Mehrphasen-Messsystem mit Mehrphasen-Messeinrichtung und mit einer Kapillaren-Messeinrichtung an einer Kapillare gemäß einer Ausführungsform.

FIG. 2 zeigt ein schematisches Zeitdiagramm für einen von der Kapillaren-Messeinrichtung für die Kapillare ermittelten zeitabhängigen Messwert.

FIG. 3A-3C zeigen schematische Längsschnittdarstellungen einer Rohrleitung und eines Mehrphasen-Messsystems mit unterschiedlich angeordneten Kapillaren gemäß weiteren Ausführungsformen.

FIG. 4A-4B zeigen schematische perspektivische Darstellungen eines Abschnitts einer Rohrleitung mit Kapillaren sowie einer Kapillare gemäß einer Ausführungsform einer Kapillaren-Messeinrichtung zur Erfassung der elektrischen Leitfähigkeit einer Phase.

FIG. 5A-5D kombinieren schematische Längsschnittdarstellungen einer Rohrleitung mit einem Mehrphasen-Messsystem gemäß einer Ausführungsform für unterschiedliche Strömungsformen mit Zeitdiagrammen für an den Kapillaren ermittelte Messwerte gemäß weiteren Ausführungsformen.

FIG. 6 zeigt eine schematische Darstellung eines Mehrphasen-Messsystems gemäß einer Ausführungsform mit einer tomographischen Mehrphasen-Messeinrichtung.

DETAILLIERTE BESCHREIBUNG

In der folgenden Detailbeschreibung wird auf die begleitenden Zeichnungen Bezug genommen, die einen Teil der Offenbarung bilden und in denen zu Veranschaulichungszwecken spezifische Ausführungsbeispiele eines Mehrphasen-Messsystems und einer strömungstechnischen Anordnung gezeigt sind. Die Existenz weiterer Ausführungsbeispiele versteht sich von selbst. Ebenso versteht es sich von selbst, dass an den Ausführungsbeispielen strukturelle und/oder logische Änderungen gemacht werden können, ohne dass dabei von dem durch die Patentansprüche Definierten abgewichen wird. Die Beschreibung der Ausführungsbeispiele ist insoweit nicht begrenzend. Insbesondere können Merkmale von im Folgenden beschriebenen Ausführungsbeispielen mit Merkmalen von anderen der beschriebenen Ausführungsbeispiele kombiniert werden, sofern sich aus dem Kontext nichts anderes ergibt.

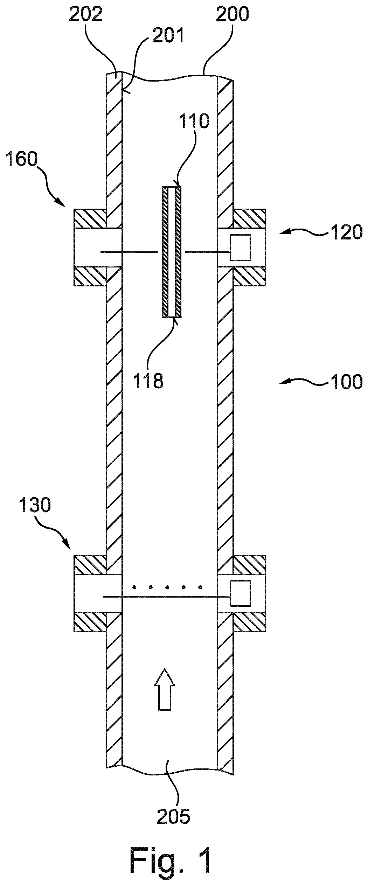

Die FIG. 1 zeigt einen Abschnitt einer Rohrleitung 200 mit Komponenten eines Mehrphasen-Messsystems 100. Im Folgenden wird das Mehrphasen-Messsystem 100 zur Vereinfachung in Zusammenhang mit der Auswertung für ein zweiphasiges Fluid 205 beschrieben.

Die Rohrleitung 200 kann einen eckigen, ovalen, kreisförmigen oder nahezu kreisförmigen Querschnitt mit einem Durchmesser zwischen wenigen Zentimetern bis zu über einem Meter aufweisen. Die Rohrleitung 200 ist dicht gegenüber dem in der Rohrleitung 200 strömenden zweiphasigen Fluid 205. Das zweiphasige Fluid 205 strömt als Zweiphasenströmung einer Phase (L) geringerer elektrischer Leitfähigkeit und einer Phase (H) höherer elektrischer Leitfähigkeit in Pfeilrichtung durch die Rohrleitung 200. Der Begriff "Phase" steht im Folgenden synonym für ein einphasiges Fluid.

Eine Mehrphasen-Messeinrichtung 130 bestimmt an Gitterpunkten einer quer zur Strömungsrichtung ausgerichteten Querschnittsebene nach einer Zeiteinheit aufgelöste, momentane lokale Volumenanteile $\alpha_{i,j,k}$ z.B. der Phase (L) geringerer elektrischer Leitfähigkeit nach Gleichung #1:

$$\#1 \qquad\qquad \alpha_{i,j,k} = \frac{U_{i,j}^{H} - U_{i,j,k}^{meas}}{U_{i,j}^{H} - U_{i,j}^{L}}$$

Dabei bezeichnen i und j die orthogonalen Ortsvariablen der Gitterpunkte in der Querschnittsebene. $U_{i,j,k}$ steht für die Größe eines Ausgangssignals der Mehrphasen-Messeinrichtung 130 (z.B. für eine analoge elektrische Spannung oder für den Ausgangswert eines Analog/Digital-Wandlers) am Gitterpunkt i, j zum Zeitpunkt k. Das Ausgangssignal $U_{i,j,k}$ ist beispielsweise proportional zur elektrischen Leitfähigkeit des im Gitterpunkt i, j befindlichen Mediums zum Zeitpunkt k.

$U_{i,j}^{H}$ und $U_{i,j}^{L}$ beschreiben die lokalen Referenzwerte von zwei einphasigen Kalibriermatrizen der Phasen mit höherer (H) bzw. niedrigerer (L) elektrischer Leitfähigkeit.

Die einphasigen Kalibriermatrizen können beispielsweise im Zuge einer Basiskalibrierung (B) bei jeweils einphasiger Durchströmung initialisiert werden. Im Zuge der Basiskalibrierung werden die Werte initialer Basis-Kalibriermatrizen $U_{i,j,B}^{H}$ und $U_{i,j,B}^{L}$ der Mehrphasen-Messeinrichtung 130 bestimmt.

Zusätzlich werden Basis-Kalibrierwerte $U_{m,B}^{H}$ und $U_{m,B}^{L}$ von m Referenzmessstellen sowie ggf. die elektrischen Leitfähigkeiten $\sigma_{B}^{H}$ und $\sigma_{B}^{L}$ der Phasen (L) und (H) mittels einer Referenzwert-Messanordnung 160 ermittelt.

Die Referenzwert-Messanordnung 160 umfasst eine oder mehrere Kapillaren 110 und eine Kapillaren-Messeinrichtung 120. Die Kapillaren-Messeinrichtung 120 kann an den Kapillaren zugeordneten Referenzmessstellen z.B. Signale erfassen, deren Amplitudenänderung proportional zu einer relativen Änderung der elektrischen Leitfähigkeit ist und/oder (bei einphasiger Durchströmung) die elektrischen Leitfähigkeiten $\sigma_{B}^{H}$ und $\sigma_{B}^{L}$ der Phasen (L) und (H) direkt bestimmen.

Die Referenzmessstellen befinden sich in den Kapillaren 110, wobei jede Kapillare 110 einer anderen Referenzmessstelle zugeordnet sein kann. Jede Kapillare 110 ist derart dimensioniert, dass Grenzflächenkräfte bzw. Kapillarkräfte in der Kapillare 110 eine mehrphasige Strömung separieren und die Phasen die Kapillaren zeitlich nacheinander durchströmen. Beispielsweise wird aus einem Zweiphasensystem in der Rohrleitung 200 in der Kapillare 110 eine binäre Strömungsform. Die Referenzwert-Messanordnung 160 kann daher laufend aktuelle Werte einer physikalischen Größe, beispielsweise aktuelle Werte der elektrischen Leitfähigkeit jeder Phase des mehrphasigen Fluids unabhängig von der jeweils anderen Phase bestimmen.

Die Referenzwert-Messanordnung 160 kann eine, zwei, drei oder mehr Kapillaren 110 aufweisen, von denen jede mindestens eine Referenzmessstelle mit einem entsprechenden Messsensor aufweist.

Die stetige Nachführung der Kalibriermatrizen der Mehrphasen-Messeinrichtung 130 kann auf der Bestimmung der relativen Änderung der elektrischen Eigenschaften der einphasigen Fluide an den Referenzmessstellen beruhen.

Aus den aktualisierten lokalen Referenzwerten kann eine Datenverarbeitungseinheit beispielsweise die lokalen Volumenanteile der Phase (L) niedrigerer elektrischer Leitfähigkeit $\alpha_{i,j,k}$ anhand aktualisierter Werte für die Kalibriermatrizen $U_{i,j}^{H}$ und $U_{i,j}^{L}$ bestimmen.

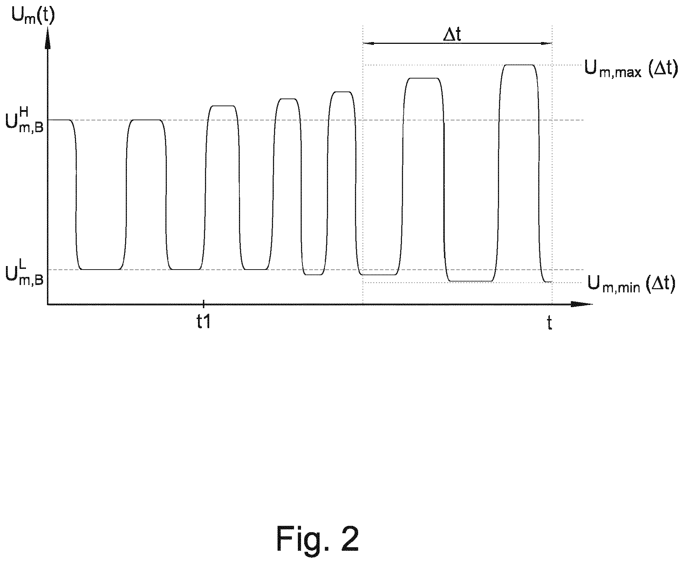

Fig. 2 zeigt einen möglichen zeitlichen Verlauf des Messwerts U$_m$(t) beispielhaft für eine beliebige Referenzmessstelle **m**. Durch die binäre Strömungsform in der Kapillare erreicht der Messwert U$_m$(t) abwechselnd die für die einzelnen Phasen charakteristischen Messwerte. Anhand des in einem gleitenden Zeitfenster Δt auftretenden Maximumwerts U$_{m,max}$(Δt) und des im gleichen Zeitfenster Δt auftretenden Minimumwerts U$_{m,min}$(Δt) können gemäß den Gleichungen #2 und #3 messstellenspezifische Kennzahlen $f_m^H$ und $f_m^L$ bestimmt werden:

$$\#2, \quad \#3 \qquad f_m^H = \frac{U_{m,max}(\Delta t)}{U_{m,B}^H} \quad , \qquad f_m^L = \frac{U_{m,min}(\Delta t)}{U_{m,B}^L}$$

Sofern die Phase (L) niedrigerer elektrischer Leitfähigkeit grundsätzlich nicht leitfähig ist, wie z.B. bei Gasen, können die zugehörigen Werte der Kalibriermatrix auf null gesetzt werden und eine Nachführung dieser Kalibriermatrix kann ohne Genauigkeitsverlust entfallen.

Anschließend können gemäß den Gleichungen #4 und #5 aus beispielsweise drei Referenzmessstellen m = 1, 2, 3 globale Nachführfaktoren $f^H$ und $f^L$ bestimmt werden:

$$\#4, \quad \#5 \qquad f^H = \max(f_1^H, f_2^H, f_3^H) \quad , \qquad f^L = \min(f_1^L, f_2^L, f_3^L)$$

Die globalen Nachführfaktoren $f^H$ und $f^L$ beschreiben die relative Änderung der elektrischen Leitfähigkeit der einphasigen Fluide im Vergleich zur Basiskalibrierung. Durch die direkte Proportionalität von Messwert und elektrischer Leitfähigkeit können die neuen Referenzwerte für die Mehrphasen-Messeinrichtung 130 gemäß den Gleichungen #6 und #7 bestimmt werden:

$$\#6, \quad \#7 \qquad \sigma^H = f^H \cdot \sigma_B^H \quad , \qquad \sigma^L = f^L \cdot \sigma_B^L$$

Die Werte in den Kalibriermatrizen können im vorliegenden Ausführungsbeispiel aufgrund des identischen Messprinzips analog gemäß den Gleichungen #8 und #9 aktualisiert werden:

$$\#8, \quad \#9 \qquad U_{i,j}^H = \frac{\sigma^H}{\sigma_B^H} \cdot U_{i,j,B}^H \quad , \qquad U_{i,j}^L = \frac{\sigma^L}{\sigma_B^L} \cdot U_{i,j,B}^L$$

Im vorliegenden Ausführungsbeispiel ist dazu eine direkte Nutzung der durch die Referenzwert-Messanordnung generierten globalen Nachführfaktoren $f^H$ und $f^L$ möglich, wie es in den Gleichungen #10 und #11 dargestellt ist:

$$\#10, \quad \#11 \qquad U_{i,j}^H = f^H \cdot U_{i,j,B}^H \quad , \qquad U_{i,j}^L = f^L \cdot U_{i,j,B}^L$$

Damit kann sich die Messung der elektrischen Leitfähigkeiten $\sigma_B^H$ und $\sigma_B^L$ im Zuge der Basiskalibrierung erübrigen.

Um eine kurze Ansprechzeit der Nachführung - insbesondere bei sinkenden Maximalwerten bzw. steigenden Minimalwerten der Leitfähigkeiten - zu erzielen, wird angestrebt das Zeitfenster Δt möglichst klein zu wählen.

Für Mehrphasenströmungen mit zwei oder mehreren leitfähigen Phasen kann eine Mindestgröße für das Zeitfenster so definiert werden, dass bei Betrachtung aller genutzten Referenzmessstellen jede Phase mindestens einmal im Zeitfenster Δt vorliegt. Wie unten gezeigt wird, ist eine solche Bedingung für eine untere Grenze des Zeitfensters nur für bestimmte Strömungsformen, beispielsweise für die intermittierende Strömung und die Blasenströmung, von Relevanz. Außerdem entfällt diese Bedingung für eine Phase, die nicht leitfähig ist und für die keine Kalibriermatrix nachgeführt wird.

Weist die Referenzwert-Messanordnung mehr als eine Kapillare auf, dann kann die Kalibrierwertnachführung gemäß den Gleichungen #6 bis #9 bzw. #10 und #11 anstelle der globalen Nachführfaktoren $f^H$ und $f^L$ aus den Gleichungen #4, #5 auch lokale Nachführfaktoren $f_{i,j}^H$, $f_{i,j}^L$ nutzen.

Jeder lokale Nachführfaktor $f_{i,j}^H$, $f_{i,j}^L$ kann sich dabei aus genau einer der messstellenspezifische Kennzahlen $f_m^H$ und $f_m^L$ bestimmen, z.B. der Kennzahl der Referenzmessstelle derjenigen Kapillare, deren Eintrittsöffnung dem jeweiligen Gitterpunkt i,j bezogen auf die Querschnittsfläche am nächsten liegt. Alternativ können in die Berechnung eines jeden lokalen Nachführfaktors $f_{i,j}^H$, $f_{i,j}^L$ zwei oder mehr messstellenspezifische Kennzahlen $f_m^H$ und $f_m^L$ eingehen, wobei die Wichtung jeder Kennzahl mit bezogen auf die Lage im Querschnitt steigendem Abstand zwischen der Kapillareneintrittsöffnung, beispielsweise dem Mittelpunkt der Kapillareneintrittsöffnung, und jeweiligem Gitterpunkt i,j abnimmt, z.B. stetig abnimmt.

Die lokalen Nachführfaktoren ermöglichen genauere Messungen insbesondere dann, wenn maßgebliche Eigenschaften derselben Phase, z.B. Temperatur und/oder Dichte, innerhalb des Strömungsquerschnitts variieren.

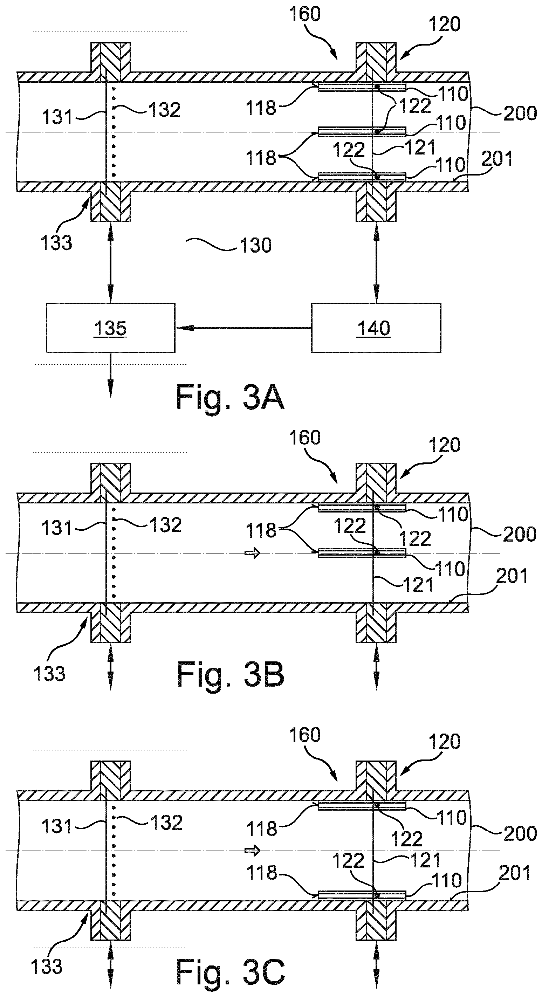

Die FIG. 3A-3C zeigen verschiedene Möglichkeiten zur Anordnung der Kapillaren 110 in der Rohrleitung 200. In allen Beispielen der Figuren 3A-3C weist die Referenzwert-Messanordnung 160 gleichartige, gerade Kapillare 110 auf und ist stromabwärts von der Mehrphasen-Messeinrichtung 130 angeordnet, wodurch eine Beeinflussung der Strömung vor der Mehrphasen-Messeinrichtung 130 vermieden werden kann. Eintrittsöffnungen 118 der Kapillaren 110 sind in einer zur Strömungsrichtung senkrechten Querschnittsebene der Rohrleitung 200 angeordnet.

Die Mehrphasen-Messeinrichtung 130 weist einen Gittersensor 133 auf, der den örtlichen elektrischen Leitwert eines die Rohrleitung 200 durchströmenden mehrphasigen Fluids an Gitter"punkten" zwischen zwei Ebenen quer zur Strömungsrichtung bestimmt. Der Gittersensor 133 weist beispielsweise mehrere lineare, parallel geführte Anregungselektroden 131 und mehrere lineare, parallel geführte Erfassungselektroden 132 auf. Die Anregungselektroden 131 sind in einer Anregungsebene und die Erfassungselektroden 132 in einer Messebene angeordnet. Anregungsebene und Messebene sind senkrecht zur Strömungsrichtung ausgerichtet und in Strömungsrichtung in einem vergleichsweise kleinen Messabstand zueinander angeordnet. Die Anregungselektroden 131 und die Erfassungselektroden 132 sind zueinander verdreht angeordnet, beispielsweise unter einem Winkel von 90 Grad. Jede Erfassungselektrode 132 kreuzt jede Anregungselektrode 131 im Messabstand, wobei alle Elektroden 131, 132 räumlich voneinander getrennt und - bei Abwesenheit eines leitfähigen Fluids - elektrisch voneinander separiert sind. Eine Auswerte- und Steuereinheit 135 der Mehrphasen-Messeinrichtung 130 regt die Anregungselektroden 131 in kurzem zeitlichem Abstand hintereinander einzeln an, beispielsweise durch Spannungsimpulse. Dabei kann in jeder Erfassungselektrode 132 ein Strom auftreten, der zum mittleren Leitwert des Messmediums in der Umgebung des Gitterpunktes zwischen der jeweiligen Erfassungselektrode 132 und der jeweils angeregten Anregungselektrode 131 proportional ist. Aus der Stromstärke in der Erfassungselektrode 132 bestimmt die Auswerte- und Steuereinheit 135 den lokalen volumetrischen Anteil einer Phase, wobei die Auswerte- und Steuereinheit 135 der Mehrphasen-Messeinrichtung 130 von einer Datenverarbeitungseinheit 140 aktuelle Referenzwerte für die elektrische Leitfähigkeit der Phasen zur Kalibrierwertnachführung empfängt. Die Datenverarbeitungseinheit 140 wertet dazu Messsignale der Kapillaren-Messeinrichtung 120 aus, beispielsweise in der Art wie oben beschrieben.

FIG. 3A zeigt drei innerhalb der Rohrleitung 200 und parallel zur Rohrachse angeordnete gerade Kapillaren 110. Eine der Kapillaren 110 ist koaxial zur Rohrleitung 200 angeordnet. Die beiden anderen Kapillaren 110 sind auf einander gegenüberliegenden Seiten der Innenwandung 201 der Rohrleitung 200 angeordnet, z.B. an der höchsten und an der tiefsten Position bei horizontaler Anordnung der Rohrleitung 200 und jeweils bündig an der Innenwandung 201 oder im Abstand zur Innenwandung 201.

In FIG. 3B ist eine erste Kapillare 110 koaxial zur Rohrleitung 200 angeordnet, wobei sich eine Eintrittsöffnung 118 der Kapillare 110 in der geometrischen Mitte des Querschnitts der Rohrleitung 200 befindet. Eine zweite Kapillare 110 ist in einem Abstand zur ersten Kapillare 110 angeordnet, der größer ist als der halbe mittlere Radius der Rohrleitung 200. Im gezeigten Ausführungsbeispiel befindet sich die zweite Kapillare 110 an der Innenwandung 201 der Rohrleitung 200. Eine Anordnung mit genau zwei Kapillaren 110 nach FIG. 3B kann beispielsweise für konzentrische Strömungsprofile, z.B. ringförmige Strömungsprofile ausreichend gut geeignet sein. Die Rohrleitung 200 kann dabei eine vertikale Rohrleitung sein.

In FIG. 3C sind genau zwei Kapillaren 110 einander gegenüberliegend an der Innenwandung 201 der Rohrleitung 200 angeordnet. Eine Anordnung mit genau zwei Kapillaren 110 nach FIG. 3C kann beispielsweise für stratifizierte Strömungen in horizontalen Rohrleitungen 200 ausreichend sein.

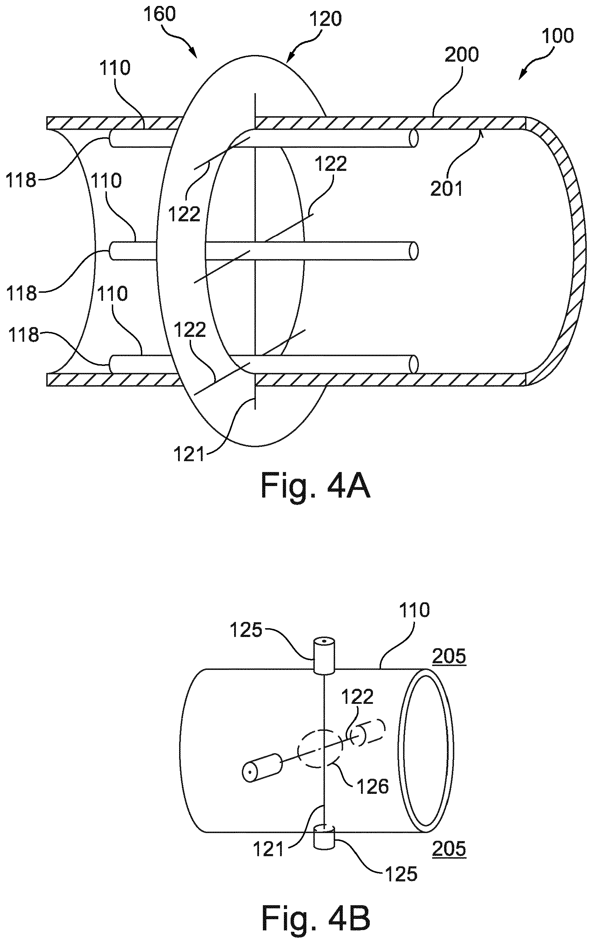

FIG. 4A und 4B zeigen Einzelheiten einer Referenzwert-Messeinrichtung 160 mit einer Kapillaren-Messeinrichtung 120 zur Bestimmung der elektrischen Leitfähigkeit von in Kapillaren 110 sequentiell separierten Phasen.

In FIG. 4A weist das Mehrphasen-Messsystem 100 neben einer (nicht dargestellten) Mehrphasen-Messeinrichtung drei gerade Kapillaren 110 auf. Eine der Kapillaren 110 ist koaxial zur Rohrleitung 200 angeordnet. Die beiden anderen Kapillaren 110 sind auf einander gegenüberliegenden Abschnitten der Innenwandung 201 der Rohrleitung 200 angeordnet und können an der Innenwandung 201 befestigt sein. Die Eintrittsöffnungen 118 der Kapillaren 110 sind entlang derselben Rohrquerschnittsebene angeordnet. Die Kapillaren 110 sind etwa gleich oder genau gleich lang und weisen etwa die gleiche oder genau die gleiche innere Querschnittsfläche und Querschnittsform auf.

Die gezeigte Kapillaren-Messeinrichtung 120 weist eine lineare Anregungselektrode 121 auf, die durch den Querschnitt jeder der Kapillaren 110 geführt ist. Die gezeigte Kapillaren-Messeinrichtung 120 weist zudem drei lineare Erfassungselektroden 122 auf, wobei jede lineare Erfassungselektrode 122 durch genau eine der Kapillaren 110 geführt ist. Gemäß einer anderen, nicht gezeichneten Ausführungsform weist die Kapillaren-Messeinrichtung 120 genau eine lineare Erfassungselektrode 122 auf, die durch den Querschnitt jeder der Kapillaren 110 geführt ist, und drei lineare Anregungselektroden 121, wobei jede lineare Anregungselektrode 122 durch genau eine der Kapillaren 110 geführt ist. Gemäß einer weiteren, nicht gezeichneten Ausführungsform weist die Kapillaren-Messeinrichtung 120 drei lineare Erfassungselektroden 122 und drei lineare Anregungselektroden 121 auf, wobei durch jede Kapillare 110 eine andere Anregungselektrode 121 und eine andere Erfassungselektrode 121 geführt ist.

FIG. 4B zeigt, dass die Anregungs- und Erfassungselektroden 121, 122 in jeder Kapillare 110 frei liegen und in einem Kreuzungsbereich 126 innerhalb der Kapillare 110 in einem Abstand von wenigen Mikrometern bis Millimetern aneinander vorbeigeführt sind. Außerhalb der Kapillaren 110 isoliert eine dielektrische Hülle 125 die Anregungs- und Erfassungselektroden 121, 122 gegen das mehrphasige Fluid 205 in der Rohrleitung 200. Wird durch die Anregungselektrode 121 ein Strom eingeprägt, fließt bei ausreichender Leitfähigkeit der Phase im Kreuzungsbereich 126 der Kapillare 110 auch ein Strom durch die Erfassungselektrode 122, wobei die Stromstärke in der Erfassungselektrode 122 proportional zur Leitfähigkeit der Phase im Kreuzungsbereich 126 ist.

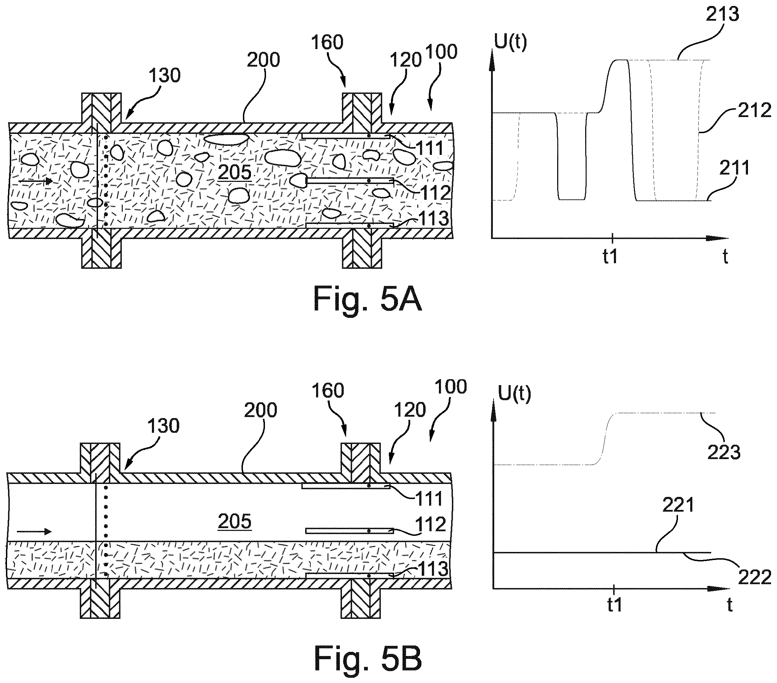

Die FIG. 5A-5D beziehen sich auf horizontale Rohrleitungen 200 mit einer Mehrphasen-Messeinrichtung 130, die einen Gittersensor aufweist, und mit einer Referenzwert-Messanordnung 160 mit drei Kapillaren 111, 112, 113 und einer den drei Kapillaren 111, 112, 113 zugeordneten Kapillaren-Messeinrichtung 120, die entsprechend den FIG. 4A-4B ausgestaltet sein kann. Die Zeitverläufe 211, 221, 231, 241 zeigen jeweils einen möglichen Verlauf des zeitabhängigen Messwerts U(t) für die obere Kapillare 111. Die Zeitverläufe 212, 222, 232, 242 zeigen jeweils einen möglichen Verlauf des zeitabhängigen Messwerts U(t) für die koaxiale Kapillare 112. Die Zeitverläufe 213, 223, 233, 243 zeigen jeweils einen möglichen Verlauf des zeitabhängigen Messwerts U(t) für die untere Kapillare 111. Der Messwert U(t) für eine der Phasen eines zweiphasigen Fluids, z.B. die Phase mit der höheren Leitfähigkeit, ändert sich sprunghaft bei t=t1.

FIG. 5A zeigt die Zeitverläufe 211, 212, 213 für den Fall einer zweiphasigen Blasenströmung. In Anwendungen, bei denen die Leitfähigkeit beider Phasen schwanken kann, kann das Zeitfenster $\Delta$t so gewählt werden, dass im Zeitfenster $\Delta$t jede der beiden Phasen in mindestens einer der Kapillaren 111, 112, 113 einmal ausgewertet wird. Die Länge des Zeitfensters $\Delta$t bestimmt die Reaktionszeit des Mehrphasen-Messsystems 100 auf eine Änderung der Leitfähigkeit einer der Phasen.

Im Fall der in FIG. 5B gezeigten stratifizierten Strömung wird bereits allein durch die gezeigte Art der Anordnung der Kapillaren 111, 112, 113 sichergestellt, dass im Betriebszustand zu jedem Zeitpunkt beide Phasen gleichzeitig ausgewertet werden können, da durch die untere Kapillare 113 jederzeit die dichtere Phase und durch die obere Kapillare 111 jederzeit die weniger dichte Phase strömt.

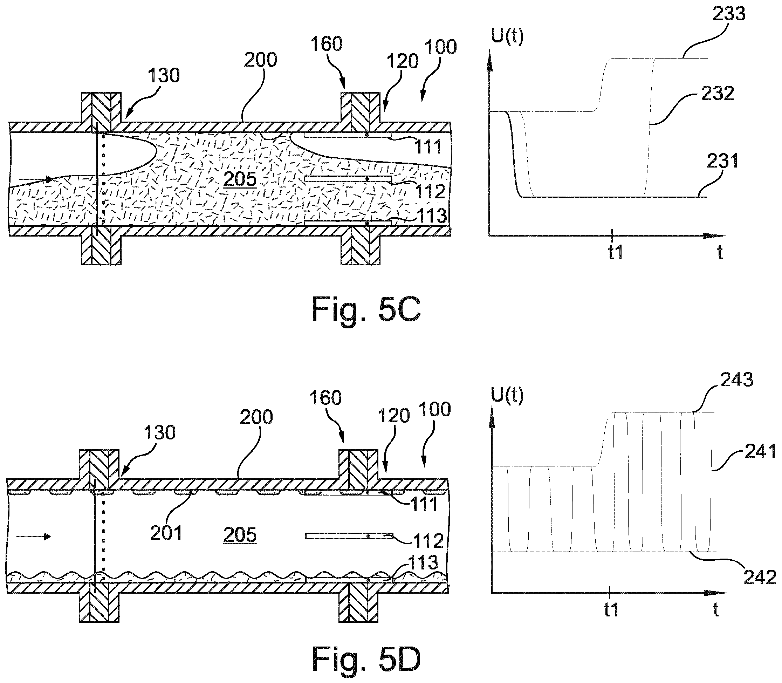

Gemäß FIG. 5C gilt für den Fall einer intermittierenden Strömung Ähnliches wie für die Blasenströmung nach FIG. 5A.

Für den Fall der in FIG. 5D gezeigten Ringströmung ermöglicht die gezeigte Art der Anordnung der Kapillaren 111, 112, 113, dass zu jedem Zeitpunkt beide Phasen gleichzeitig ausgewertet werden können, da im Betriebszustand zu jedem Zeitpunkt durch mindestens eine der äußeren Kapillaren 111, 113 die dichtere Phase und durch die koaxiale Kapillare 112 jederzeit die weniger dichte Phase strömt.

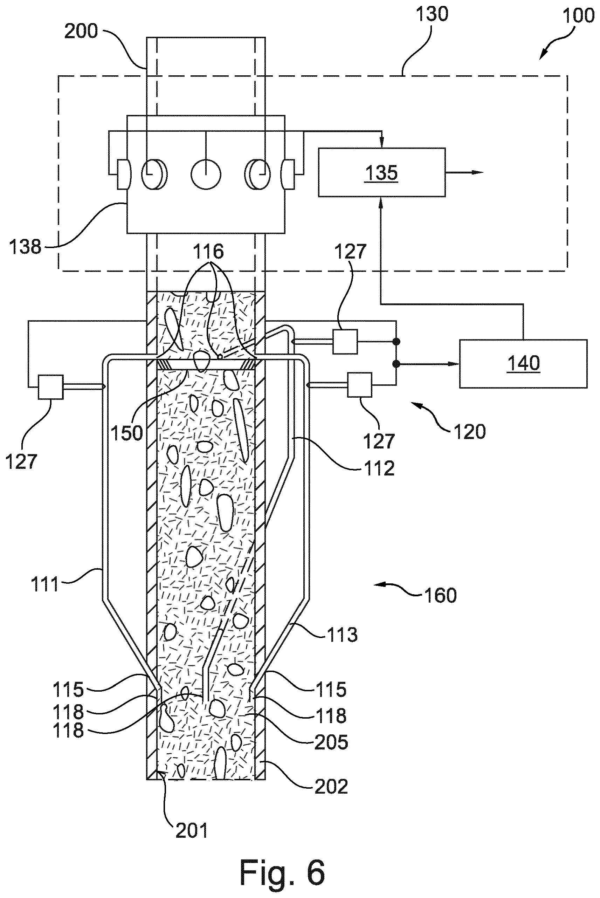

FIG. 6 zeigt ein Mehrphasen-Messsystem 100 mit drei Kapillaren 111, 112, 113 in einer vertikalen Rohrleitung 200, in der ein zweiphasiges Fluid 205 von unten nach oben in vertikaler Richtung strömt. Die Eintrittsöffnungen 118 der drei Kapillaren 111, 112, 113 sind in diesem Ausführungsbeispiel stromaufwärts von einer Mehrphasen-Messeinrichtung 130 in einer Querschnittsebene der Rohrleitung 200 angeordnet. Die Kapillaren 111, 112, 113 sind durch erste Bohrungen 115 in der Rohrwandung 202 nach außen geführt. Die ersten Bohrungen 115 können schräg zur Rohrleitung 200 im flachen Winkel von der Strömungsrichtung abweichend geführt sein. Die Kapillaren 111, 112, 113 münden weiter stromabwärts und vor einer Mehrphasen-Messeinrichtung 130 durch zweite Bohrungen 116 in die Rohrleitung 200. Die zweiten Bohrungen 116 können senkrecht zur Rohrwandung 202 geführt sein. Die außenliegenden Kapillaren 111, 112, 113 ermöglichen eine Messung der relevanten physikalischen Größe(n) durch Messmittel 127 außerhalb der Rohrleitung 200.

Zwischen den ersten Bohrungen 115 und den zweiten Bohrungen 116, z.B. unmittelbar stromaufwärts von den zweiten Bohrungen 116 kann in der Rohrleitung 200 eine Strömungswiderstandseinrichtung 150 angeordnet sein. Der Strömungswiderstand der Strömungswiderstandseinrichtung 150 kann so gewählt sein, dass die Kapillaren 111, 112, 113 auch bei der niedrigsten im Anwendungsfall anzunehmenden Strömungsgeschwindigkeit in der Rohrleitung 200 ohne weitere Hilfsmittel ausreichend schnell durchströmt werden. Der Strömungswiderstand der Strömungswiderstandseinrichtung 150 kann einstellbar sein. Beispielsweise weist die Strömungswiderstandseinrichtung 150 eine Iris-Blende mit variabler Öffnung auf.

Die Kapillaren-Messeinrichtung 120 weist beispielsweise drei Nadelsonden 127 auf. Jede Nadelsonde 127 misst beispielsweise die momentane elektrische Leitfähigkeit beider Phasen sowie die momentane relative Permittivität beider Phasen und überträgt die gemessenen Größen in geeigneter Form an eine Datenverarbeitungseinheit 140. Die Datenverarbeitungseinheit 140 bestimmt anhand der von der Kapillaren-Messeinrichtung 120 empfangenen Information globale Minimal- und Maximalwerte in den drei Kapillaren und überträgt diese als aktualisierte Referenzwerte für die Kalibrierwertnachführung an eine Mehrphasen-Messeinrichtung 130.

Die Mehrphasen-Messeinrichtung 130 weist einen tomographischen Sensorkopf 138 auf, der z.B. ortsaufgelöste Information über die Mehrphasenströmung ermittelt. Eine Auswerte- und Steuereinheit 135 der Mehrphasen-Messeinrichtung 130 empfängt die aktualisierten Referenzwerte von der Datenverarbeitungseinheit 140 sowie die ortsaufgelöste Information über die Mehrphasenströmung vom Sensorkopf 138 und berechnet aus beiden einen Volumen- und/oder Massenanteil mindestens einer der Phasen und/oder einen Volumen- und/oder Massenstrom mindestens einer der Phasen.

**Patentansprüche**

1. Mehrphasen-Messsystem (100) für ein mehrphasiges Fluid (205), aufweisend:

    eine Referenzwert-Messanordnung (160), die mindestens eine Kapillare (110) und eine Kapillaren-Messeinrichtung (120) aufweist,
    wobei innere Querschnittsfläche und Länge der Kapillare (110) so bemessen sind, dass sich die Phasen des mehrphasigen Fluids (205) bei Durchströmung der Kapillare (110) in Durchströmungsrichtung separieren und wobei die Kapillaren-Messeinrichtung (120) für eine Bestimmung mindestens einer physikalischen Eigenschaft mindestens einer der durch die Kapillare (110) fließenden Phasen eingerichtet ist; und
    eine Mehrphasen-Messeinrichtung (130), die für eine Messung eines Volumen- und/oder Massenanteils von mindestens einer Phase des mehrphasigen Fluids und/oder für eine Messung eines Volumen- und/oder Massenstroms von mindestens einer der Phasen des mehrphasigen Fluids unter Berücksichtigung der durch die Kapillaren-Messeinrichtung (120) bestimmten physikalischen Eigenschaft eingerichtet ist, wobei sich aus der mindestens einen von der Kapillaren-Messeinrichtung (120) ermittelten physikalischen Eigenschaft auf eine physikalische Eigenschaft schließen lässt, aufgrund der die Mehrphasen-Messeinrichtung (130) den Volumen- und/oder Massenanteil mindestens einer der Phasen oder den Volumen- und/oder Massenstrom mindestens einer der Phasen bestimmt.

2. Mehrphasen-Messsystem nach Anspruch 1,
   wobei die innere Querschnittsfläche der Kapillare (110) höchstens $\pi*25mm^2$ beträgt.

3. Mehrphasen-Messsystem nach einem der vorhergehenden Ansprüche, wobei
   die Länge der Kapillare (110) höchstens 100cm beträgt.

4. Mehrphasen-Messsystem nach einem der vorhergehenden Ansprüche, wobei
   die physikalische Eigenschaft die elektrische Leitfähigkeit und/oder die relative Permittivität ist.

5. Mehrphasen-Messsystem nach einem der vorhergehenden Ansprüche, wobei
   die Mehrphasen-Messeinrichtung (130) einen Gittersensor (133) aufweist.

6. Mehrphasen-Messsystem nach einem der vorhergehenden Ansprüche, weiter aufweisend:
   eine Datenverarbeitungseinheit (140), die anhand der durch die Kapillaren-Messeinrichtung (120) gemessenen physikalischen Eigenschaft oder Eigenschaften mindestens einen Referenzwert für die Mehrphasen-Messeinrichtung (130) bereitstellt.

7. Mehrphasen-Messsystem nach einem der vorhergehenden Ansprüche, wobei
   das Mehrphasen-Messsystem (100) mindestens drei Kapillaren (110) aufweist, deren Querschnitt und Länge so bemessen sind, dass sich bei Durchströmung der Kapillaren (110) mit zwei Phasen des mehrphasigen Fluids (205) ein binärer Strömungsfluss in den Kapillaren (110) einstellt, wobei die Kapillaren (110) unterschiedlichen Teilströmen des mehrphasigen Fluids (205) zugeordnet sind.

8. Strömungstechnische Anordnung, aufweisend:

    das Mehrphasen-Messsystem (100) für ein mehrphasiges Fluid (205) nach einem der vorhergehenden Ansprüche; und
    eine Rohrleitung (200), wobei eine Eintrittsöffnung (118) der mindestens einen Kapillare (110) in einer Querschnittsebene der Rohrleitung (200) angeordnet ist.

9. Strömungstechnische Anordnung nach dem vorhergehenden Anspruch, wobei

eine Eintrittsöffnung (118) einer der Kapillaren (110) im geometrischen Mittelpunkt des Querschnitts der Rohrleitung (200) und eine Eintrittsöffnung (118) einer weiteren der Kapillaren (110) in einem Abstand zum geometrischen Mittelpunkt des Querschnitts der Rohrleitung (200) angeordnet ist.

10. Strömungstechnische Anordnung nach einem der zwei vorhergehenden Ansprüche, wobei mindestens eine der Kapillaren (110) an einer Innenwandung (201) der Rohrleitung (200) angeordnet ist.

11. Strömungstechnische Anordnung nach einem der drei vorhergehenden Ansprüche, wobei die Kapillaren (110) vollständig in der Rohrleitung (200) angeordnet sind.

12. Strömungstechnische Anordnung nach einem der vier vorhergehenden Ansprüche, wobei mindestens eine der Kapillaren (110) teilweise außerhalb der Rohrleitung (200) angeordnet ist.

13. Strömungstechnische Anordnung nach einem der fünf vorhergehenden Ansprüche, wobei die mindestens eine Kapillare (110) so eingerichtet und angeordnet ist, dass sich eine Durchströmung der Kapillare (110) durch eine Druckdifferenz zwischen Eingangsöffnung (118) und Ausgangsöffnung der Kapillare (110) ergibt.

14. Strömungstechnische Anordnung nach einem der sechs vorhergehenden Ansprüche, wobei die innere Querschnittsfläche der mindestens einen Kapillare (110) maximal 5% einer inneren Querschnittsfläche der Rohrleitung (200) in der Querschnittsebene der Eintrittsöffnung (118) beträgt.

15. Strömungstechnische Anordnung nach einem der sieben vorhergehenden Ansprüche, wobei die Länge der mindestens einen Kapillare (110) maximal ein Zehnfaches eines maximalen Innendurchmessers der Rohrleitung (200) in der Querschnittsebene der Eintrittsöffnung (118) beträgt.

## Claims

1. A multi-phase measurement system (100) for a multi-phase fluid (205), comprising:

    a reference value measurement assembly (160), which comprises at least one capillary (110) and a capillary measurement device (120),
    wherein the inner cross-sectional area and the length of the capillary (110) are dimensioned such that the phases of the multi-phase fluid (205) separate in the flow direction when flowing through the capillary (110), and
    wherein the capillary measurement device (120) is configured for determining at least one physical property of at least one of the phases flowing through the capillary (110); and
    a multi-phase measurement device (130), which is configured for measuring a volume and/or mass fraction of at least one phase of the multi-phase fluid and/or for measuring a volume and/or mass flow of at least one of the phases of the multi-phase fluid taking into account the physical property determined by the capillary measurement device (120), wherein the at least one physical property determined by the capillary measurement device (120) allows a physical property to be inferred, on the basis of which the multi-phase measurement device (130) determines the volume and/or mass fraction of at least one of the phases or the volume and/or mass flow of at least one of the phases.

2. The multi-phase measurement system according to claim **1,**
    wherein the inner cross-sectional area of the capillary (110) is at most $\pi*25$ mm$^2$.

3. The multi-phase measurement system according to any one of the preceding claims, wherein the length of the capillary (110) is at most 100 cm.

4. The multi-phase measurement system according to any one of the preceding claims, wherein the physical property is the electrical conductivity and/or the relative permittivity.

5. The multi-phase measurement system according to any one of the preceding claims, wherein the multi-phase measurement device (130) comprises a grating sensor (133).

6. The multi-phase measurement system according to any one of the preceding claims, further comprising: a data processing unit (140), which provides at least one reference value for the multi-phase measurement device (130) on the basis of the physical property or properties measured by the capillary measurement device (120).

7. The multi-phase measurement system according to any one of the preceding claims,
wherein the multi-phase measurement system (100) comprises at least three capillaries (110), the cross-section and length of which are dimensioned such that a binary flow is established in the capillaries (110) when two phases of the multi-phase fluid (205) flow through the capillaries (110), the capillaries (110) being assigned to different partial flows of the multi-phase fluid (205).

8. A fluidic assembly, comprising:

the multi-phase measurement system (100) for a multi-phase fluid (205) according to any one of the preceding claims; and
a conduit (200), wherein an inlet opening (118) of the at least one capillary (110) is arranged in a cross-sectional plane of the conduit (200).

9. The fluidic assembly according to the preceding claim, wherein
an inlet opening (118) of one of the capillaries (110) is arranged in a geometric center of the cross-section of the conduit (200) and an inlet opening (118) of a further one of the capillaries (110) is arranged at a distance from the geometric center of the cross-section of the conduit (200).

10. The fluidic assembly according to any one of the two preceding claims, wherein
at least one of the capillaries (110) is arranged on an inner wall (201) of the conduit (200).

11. The fluidic assembly according to any one of the three preceding claims, wherein
the capillaries (110) are arranged completely in the conduit (200).

12. The fluidic assembly according to any one of the four preceding claims, wherein
at least one of the capillaries (110) is arranged partially outside the conduit (200).

13. The fluidic assembly according to any one of the five preceding claims, wherein
the at least one capillary (110) is configured and arranged such that a flow through the capillary (110) results from a pressure difference between the inlet opening (118) and the outlet opening of the capillary (110).

14. The fluidic assembly according to any one of the six preceding claims, wherein
the inner cross-sectional area of the at least one capillary (110) is at most 5% of an inner cross-sectional area of the conduit (200) in the cross-sectional plane of the inlet opening (118).

15. The fluidic assembly according to any one of the seven preceding claims, wherein
the length of the at least one capillary (110) is at most ten times a maximum inner diameter of the conduit (200) in the cross-sectional plane of the inlet opening (118).

**Revendications**

1. Système de mesure polyphasé (100) pour un fluide polyphasique (205), présentant :

un agencement de mesure de valeur de référence (160), qui présente au moins un capillaire (110) et un équipement de mesure de capillaire (120),
dans lequel la surface de section transversale intérieure et la longueur du capillaire (110) sont dimensionnées de telle sorte que les phases du fluide polyphasique (205) se séparent lors de l'écoulement à travers le capillaire (110) dans la direction d'écoulement, et
dans lequel l'équipement de mesure de capillaire (120) est configuré pour déterminer au moins une propriété physique d'au moins une des phases s'écoulant à travers le capillaire (110) ; et
un équipement de mesure polyphasé (130), qui est configuré pour mesurer une part en volume et/ou en masse d'une phase au moins du fluide polyphasique et/ou pour mesurer un débit volumique et/ou massique de l'une au moins des phases du fluide polyphasique en tenant compte de la propriété physique déterminée par le système de mesure de capillaire (120), dans lequel il est possible de déduire de l'au moins une propriété physique déterminée par l'équipement de mesure de capillaire (120) une propriété physique sur la base de laquelle l'équipement de mesure polyphasé (130) détermine la part en volume et/ou en masse de l'une au moins des phases ou le débit volumique et/ou massique de l'une au moins des phases.

2. Système de mesure polyphasé selon la revendication 1,
dans lequel la surface de section transversale intérieure du capillaire (110) s'élève au maximum à $\pi*25$ mm$^2$.

3. Système de mesure polyphasé selon l'une des revendications précédentes, dans lequel
la longueur du capillaire (110) s'élève au maximum à 100 cm.

4. Système de mesure polyphasé selon l'une des revendications précédentes, dans lequel
la propriété physique est la conductivité électrique et/ou la permittivité relative.

5. Système de mesure polyphasé selon l'une des revendications précédentes, dans lequel
L'équipement de mesure polyphasé (130) présente un capteur à grille (133).

6. Système de mesure polyphasé selon l'une des revendications précédentes, présentant par ailleurs :
une unité de traitement de données (140), qui fournit au moins une valeur de référence pour l'équipement de mesure polyphasé (130) à l'aide de la ou des propriétés physiques mesurées par l'équipement de mesure de capillaire (120).

7. Système de mesure polyphasé selon l'une des revendications précédentes, dans lequel
le système de mesure polyphasé (100) présente au moins trois capillaires (110) dont la section transversale et la longueur sont dimensionnées de telle sorte qu'un flux binaire d'écoulement dans les capillaires (110) s'établit lors de l'écoulement à travers les capillaires (110) avec deux phases du fluide polyphasique (205), dans lequel les capillaires (110) sont associés à différents flux partiels du fluide polyphasique (205).

8. Agencement technique à écoulement, présentant :

le système de mesure polyphasé (100) pour un fluide polyphasique (205) selon l'une des revendications précédentes ; et
une canalisation (200), dans lequel une ouverture d'entrée (118) de l'au moins un capillaire (110) est disposée dans un plan de section transversale de la canalisation (200).

9. Agencement technique à écoulement selon la revendication précédente, dans lequel
une ouverture d'entrée (118) d'un des capillaires (110) est disposée au centre géométrique de la section transversale de la canalisation (200) et une ouverture d'entrée (118) d'un autre des capillaires (110) est disposée à une distance du centre géométrique de la section transversale de la canalisation (200).

10. Agencement technique à écoulement selon l'une des deux revendications précédentes, dans lequel
l'un au moins des capillaires (110) est disposé sur une paroi intérieure (201) de la canalisation (200).

11. Agencement technique à écoulement selon l'une des trois revendications précédentes, dans lequel
les capillaires (110) sont entièrement disposés dans la canalisation (200).

12. Agencement technique à écoulement selon l'une des quatre revendications précédentes, dans lequel
l'un au moins des capillaires (110) est en partie disposé à l'extérieur de la canalisation (200).

13. Agencement technique à écoulement selon l'une des cinq revendications précédentes, dans lequel
l'au moins un capillaire (110) est configuré et est disposé de telle sorte qu'un écoulement à travers le capillaire (110) résulte d'une différence de pression entre l'ouverture d'entrée (118) et l'ouverture de sortie du capillaire (110).

14. Agencement technique à écoulement selon l'une des six revendications précédentes, dans lequel
la surface de section transversale intérieure de l'au moins un capillaire (110) s'élève au maximum à 5 % d'une surface de section transversale intérieure de la canalisation (200) dans le plan de section transversale de l'ouverture d'entrée (118).

15. Agencement technique à écoulement selon l'une des sept revendications précédentes, dans lequel
la longueur de l'au moins un capillaire (110) s'élève au maximum à dix fois un diamètre intérieur maximal de la canalisation (200) dans le plan de section transversale de l'ouverture d'entrée (118).

Fig. 1

Fig. 2

Fig. 3A

Fig. 3B

Fig. 3C

Fig. 4A

Fig. 4B

Fig. 5A

Fig. 5B

Fig. 5C

Fig. 5D

EP 4 031 857 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9927270 B2
- US 5287752 A
- DE 19649011 C2
- DE 102006019178 B2
- US 20150293047 A1
- DE 102008055032 A1
- US 5260667 A
- US 20170261357 A1